**Europäisches Patentamt**

**European Patent Office**

**Office européen des brevets**

(11) Publication number: **0 193 058**
**A2**

# EUROPEAN PATENT APPLICATION

(21) Application number: **86101961.0**

(22) Date of filing: **15.02.86**

(51) Int. Cl.⁴: **F 16 C 33/44**

(30) Priority: **01.03.85 IT 5306285 U**

(43) Date of publication of application:
**03.09.86 Bulletin 86/36**

(84) Designated Contracting States:
**DE FR GB SE**

(71) Applicant: **RIV-SKF OFFICINE DI VILLAR PEROSA S.p.A**
**Via Mazzini 53**
**I-10123 Torino(IT)**

(72) Inventor: **Vidale, Onorio**
**Corso Venezia, 5**
**I-10100 Torino(IT)**

(74) Representative: **Bongiovanni, Guido et al,**
**c/o Ingg. Carlo e Mario Torta Via Viotti 9**
**I-10121 Torino(IT)**

(54) Bearing ball spacing retainer.

(57) The spacing retainer comprises a ring (6), a number of parts (7) projecting in the direction of the bearing axis and on one side in relation to the said ring, and a number of seats (8) for the said balls, each of the said seats consisting of a spherical surface and being formed between two adjacent said projecting parts and on the said ring; each said projecting part presents a slot (9) lying substantially in a plane tangent with a cylindrical surface coaxial with the retainer itself, and designated to form a pair of flexibly and radially deformable tabs (10).

Fig.1

BEARING BALL SPACING RETAINER

The present invention relates to a bearing ball spacing retainer made of thermoplastic material and enabling the manufacture of a bearing with a large number of balls on which correct guiding action is exerted.

Spacing retainers of the aforementioned type usually comprise a ring and a number of pairs of deformable tabs projecting from the said ring in the retainer axis direction. On the two tabs adjacent to each ball, there is formed a ball seat comprising a spherical surface portion. Each of the said tabs projects axially beyond the ball centre plane, in such a manner as to form a back draft for the ball with which it is in contact, and so prevent withdrawal of the ball from its respective seat.

Though on the whole satisfactory, a major drawback on retainers of the aforementioned type is that they are poorly suited for use on bearings with a large number of balls and, consequently, little clearance between adjacent ball surfaces, in that the gap formed between the said adjacent

0193058

ball surfaces is too small for accommodating two tabs without excessively reducing the thickness of the same, particularly the thickness of the radially innermost part of the tabs.

In other words, retainers of the aforementioned type cannot be employed on bearings having a large number of balls or, more generally speaking, when the said balls are packed tightly together.

Spacing retainers are also known whereby the two tabs adjacent to each ball are arranged on different diameters, in such a manner that adjacent tabs are located almost on the same meridian plane of the retainer, thus enabling the said adjacent tabs to be accommodated inside the gap, however small, formed between two adjacent balls.

The drawback on spacing retainers of this type, however, lies in the poor grip exerted by each tab on the ball. In fact, owing to the reduced radial height of the tab, equal to roughly half that of a normal tab on retainers of the aforementioned type, only a very small spherical surface area of the tab mates with the ball.

The aim of the present invention is to provide a bearing ball spacing retainer of the aforementioned type, but involving none of the aforementioned drawbacks, i.e. a retainer which may be used on high load capacity bearings with a large number of tightly packed balls, and which provides for exerting firm gripping action on the balls themselves.

With this aim in view, according to the present invention, there is provided a bearing ball spacing retainer made of flexibly deformable synthetic material and designed to position the centres of the said balls in a plane perpendicular to the bearing axis and equally spaced about the same circumference, the said retainer comprising a ring, a number of parts projecting in the direction of the bearing axis and on one side in relation to the said ring, and a number of seats for the said balls, each of the said seats consisting of a spherical surface and being formed between two adjacent said projecting parts and on the said ring, characterised by the fact that each said projecting part presents a slot lying substantially in a plane tangent with a cylindrical surface coaxial with the retainer itself, and designed to form a pair of flexibly and radially deformable tabs.

The present invention will now be described in more detail with reference to the Figures in the accompanying drawings in which :

- Fig.1 shows a vertical section of an oblique double-row bearing fitted with a pair of spacing retainers in accordance with the present invention;
- Fig.2 shows a view in perspective of part of the retainer in accordance with the present invention;
- Fig.3 shows a section along line III-III of the retainer in Fig.2;
- Fig.4 shows a section along line IV-IV of the retainer in Fig.3.

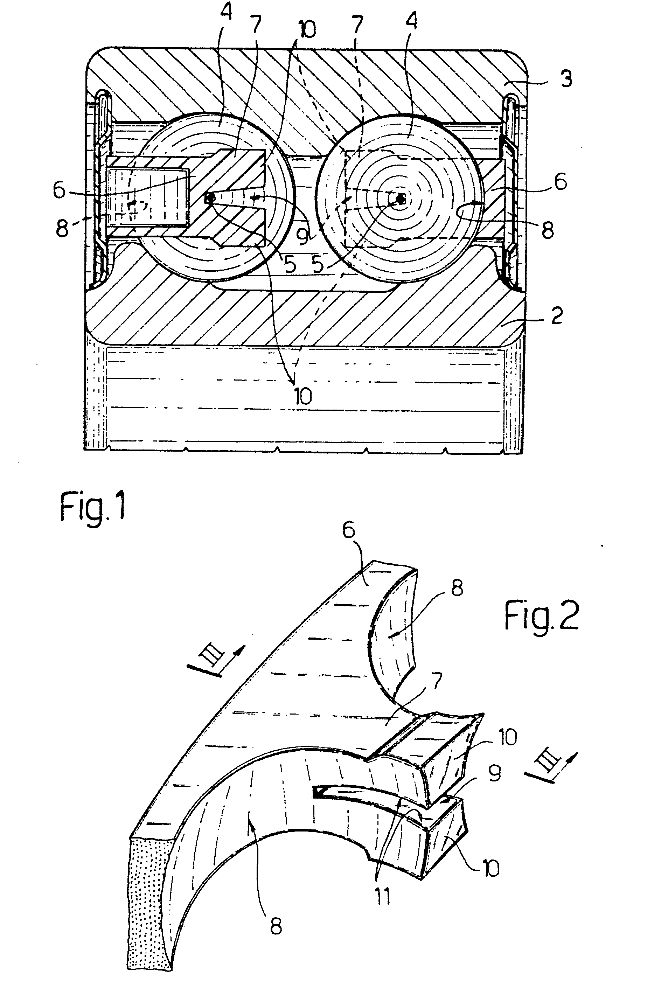

The spacing retainer in accordance with the present invention is designed to fit onto a ball bearing of the type shown in Fig.1 and substantially comprising an inner ring 2 and an outer ring 3 between which are arranged two rows of balls 4. By virtue of the spacing retainer in accordance with the present invention, the centres 5 of balls 4 all lie in a plane perpendicular to the bearing axis through the centres themselves, and are arranged equally spaced about the same circumference.

The spacing retainer in accordance with the present invention substantially comprises a ring 6 and a number of projecting parts 7 each projecting axially from the ring towards the centre 5 of each ball. Between two adjacent said projecting parts, there is formed a ball seat 6 (Fig.2) substantially defined by a spherical surface portion. As shown clearly in Fig.s 2, 3 and 4, the said seat is formed partially on ring 6 and partially on two adjacent projecting parts 7.

In accordance with the present invention, on each projecting part 7, there is formed a slot 9 substantially lying in a plane tangent with a cylindrical surface coaxial with retainer ring 6, each said slot 9 thus forming a pair of flexibly and radially deformable tabs 10.

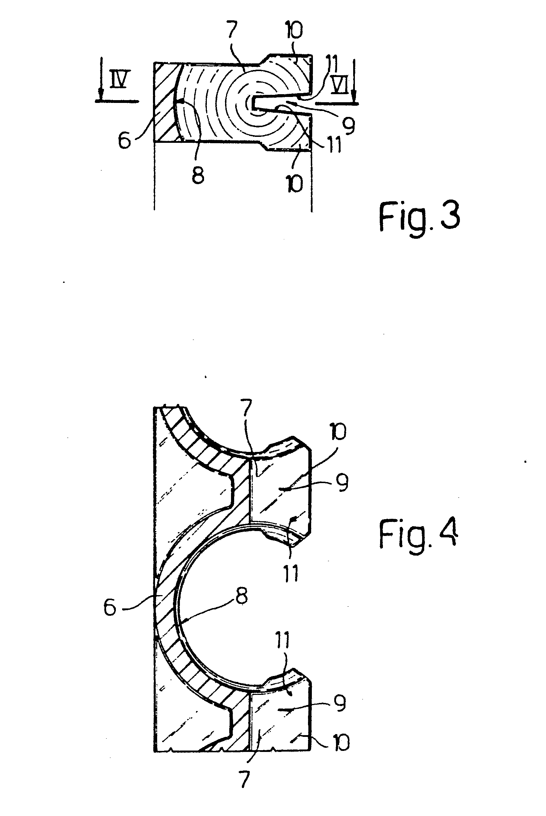

Each slot 9 conveniently lies substantially in a plane tangent with the cylindrical surface coaxial with ring 6 and containing centres 5 of balls 4, as shown clearly in Fig.3. Furthermore, the mid cylindrical surface of ring 6 preferably coincides with the aforementioned cylindrical surface, so that the radial height of both tabs 10 is the same.

As shown clearly in Fig.3, the radial height of each projecting part 7 is greater at the tab 10 end than at the root end adjoining ring 6, and is also greater than the radial height of ring 6 itself. In like manner, the area of the surface on each seat 8 contacting ball 4 is not diminished in the tab 10 area, by virtue of slot 9, thus providing for efficient gripping action between balls 4 and tabs 10.

Each of slots 9 is defined by a pair of surfaces 11 diverging towards one side of the retainer and which may be slightly curved so as to form a curved slot.

Manufacture, assembly and operation of the retainer as described above are as follows.

The retainer is conveniently made of thermoplastic material injection molded in the usual way. As the mold parts forming the spherical surfaces of each seat 8 give rise to back drafts during extraction, the said parts do not damage the retainer, in that, relative movement between the said parts and the retainer is accompanied by flexible deformation of tabs 10 which substantially flex radially in relation to the retainer.

Balls 4 are fitted inside respective seats 8 by simply flexing tabs 10 adjacent to each said seat.

During operation of the bearing, each ball is held in place and prevented from being accidentally withdrawn from the retainer by the surface portions formed on each tab 10 and mating with the surface of the ball, which surface portions form a back draft for each ball, preventing it from being withdrawn from the retainer.

The clearance between adjacent balls works out to be very small owing to the fact that, having only a very limited effect on the mechanical strength and bending rigidity of the tabs, the tangential width of each projecting part 7 and respective tabs 10 may also be very small.

Furthermore, firm gripping of the balls is provided for by the extensive area of the spherical surfaces on tabs 10 contacting the said balls. Such an advantage is particularly achieved when, as in the arrangement shown, the radial height of each projecting part 7 is greater at the tab 10 end than on the root portion towards ring 6.

To those skilled in the art it will be clear that changes may be made to the arrangement described herein without, however, departing from the scope of the present invention.

CLAIMS

1) - A bearing ball spacing retainer made of flexibly deformable synthetic material and designed to position the centres of the said balls in a plane perpendicular to the bearing axis and equally spaced about the same circumference, the said retainer comprising a ring, a number of parts projecting in the direction of the bearing axis and on one side in relation to the said ring, and a number of seats for the said balls, each of the said seats consisting of a spherical surface and being formed between two adjacent said projecting parts and on the said ring, characterised by the fact that each said projecting part presents a slot lying substantially in a plane tangent with a cylindrical surface coaxial with the retainer itself, and designed to form a pair of flexibly and radially deformable tabs.

2) - A spacing retainer as claimed in Claim 1, characterised by the fact that each slot lies substantially in a plane tangent with the cylindrical surface coaxial with the retainer and containing the ball centres.

3) - A spacing retainer as claimed in Claim 2, characterised by the fact that the centres of the said balls lie on the cylindrical surface coaxial with the retainer, which cylindrical surface constitutes the mid cylindrical surface of the said ring, so that the radial height of both said tabs is the same.

4) - A spacing retainer as claimed in one of the foregoing Claims, characterised by the fact that each of the said slots is slightly curved and defined by a pair of surfaces converging outwards of the retainer.

5) - A spacing retainer as claimed in one of the foregoing Claims, characterised by the fact that the radial height of each of the said projecting parts is greater than that of the said ring from which the said parts project.

Fig.1

Fig.2

Fig. 3

Fig. 4